# EUROPEAN PATENT APPLICATION

(11) **EP 4 298 879 A1**
(43) Date of publication of application: **03.01.2024**
(21) Application number: 23178196.4
(22) Date of filing: 08.06.2023
(51) Int. Cl.: A01B 35/24, A01B 61/04, A01B 71/02

(54) **TINE SHANK UNIT FOR CULTIVATING IMPLEMENTS AND CULTIVATING IMPLEMENTS COMPRISING SUCH TINE SHANKS**

(30) Priority: 27.06.2022 DK PA202200617
(71) Applicant: CMN Maskintec A/S, 7790 Thyholm (DK)
(72) Inventor: Nygård, Claus Martin Holmen, 7790 Thyholm (DK)
(74) Representative: Larsen & Birkeholm A/S

(57) **Abstract**

The present invention relates to a tine shank unit for cultivating implements and cultivating implements comprising such tine shanks. The tine shank unit comprises a tine shank, a housing, and a spring.

## Description

### Technical field of the invention

The present invention relates to the field of mechanical weed control of crops.

### Background of the invention

The main rule within mechanical weed control is to control seed weed by covering it. Therefore, it is important to till the soil as thoroughly as possible, without damaging the cultivated crop. Spring tines are often used on soil cultivating implements, such as harrows, row cleaners, and cultivators, or the like, and are provided with a curved spring section whose upper end is designed for the fastening to the implement and whose lower end or shank is configured for receiving a tine point, such as a harrow tip, ploughshare, cultivator sweep, or the like. The tine point on the spring tine enters into the soil to loosen it and tends to break down clods into smaller fragments. If a tine point encounters a solid obstacle in the ground, the spring section allows the tine to be elastically deformed, thereby allowing the tine point to move around the obstacle and avoiding the application of shock loads to the cultivator. So-called "S-tines" are commonly used in soil cultivating implements and are named for their shape, i.e., the longitudinal centreline of the tine is formed in an S-shape, which lies in a plane (referred to herein as the plane of the tine). A particular problem with current S-tines is that the elastic deformation sometimes results in damaging the crops when the deformation occurs sideways.

### Object of the Invention

The objective of the present invention is to provide a tine with less risk of damaging the crops and at the same time is capable of absorbing the shock when hitting an obstacle, such as a rock, within the soil.

### Description of the Invention

A first aspect of the present invention relates to a tine shank unit for cultivating implements, such as row cleaners, said tine shank unit comprising:
- a tine shank with a first end and a second end;
- a housing; and
- a spring with a first end and a second end;

wherein the first end of said tine shank is tiltably mounted to the housing,
wherein the first end of said tine shank is mounted to the second end of said spring, and wherein the first end of said spring is mounted to or near said housing.

When a tine point of a tine shank unit encounters a solid obstacle within the soil, this configuration restricts the tine shank, on which the tine point is part of or mounted to, to only move rearwards relative to the moving direction of the cultivating implement on which the tine shank unit is mounted, thereby minimizing the risk og damaging the crops.

The term "soil cultivating implement" as used herein includes cultivators, such as harrows, row cleaners, and cultivators, and the tine shank unit according to the invention may be provided on soil cultivating implements of the type, which are intended to be used either before or after previous working of the soil.

In one or more embodiments, the tine shank unit comprises a spring resistance regulation unit operably connected to the spring. This embodiment enables a user to regulate how sensitive the tine shank should be relative to obstacles or the soil type. Suitable types of such regulation units may be mechanisms adapted for controlling the spring's resistance to being stretched or compressed, depending on the construction. Such mechanisms may comprise a treaded bolt operably connected to the spring and a treaded nut operably connected to the bolt for adjustment thereof.

In one or more embodiments, the tine shank is sickle shaped. Preferably, the first end of the tine shank is substantially straight, and the second end of the tine shank is substantially curved. This embodiment has shown to be particularly strong, thereby prolonging its operating lifetime.

In one or more embodiments, the housing comprises a working depth regulator mechanism adapted for regulating the working depth of said tine shank. One suitable example of regulating the working depth could be to regulate the tilt angle of the tine shank. In one or more embodiments, the working depth regulator mechanism comprises:
- one or more pin holes formed in the housing; and
- one or more working depth regulator pins. The insertion of the one or more working depth regulator pins into the one or more pin holes allows a user to regulate the tilt angle of the tine shank.

In one or more embodiments, the spring is a coil spring is a tension spring.

In one or more embodiments, the spring is mounted such that it is stretched when the second end of the tine shank is forced backwards during a forward operation of said tine shank unit.

In one or more embodiments, the tine shank unit further comprises a tine point adapted for loosening soil, such as a cultivator sweep. Preferably, the tine point is adapted for releasably fastening to the second end of the tine shank.

A second aspect relates to a cultivating implement comprising a tine shank unit according to the present invention.

In one or more embodiments, the cultivating implement further comprises a parallelogram adapted for supporting one or more tine shank units according to the present invention. The parallelogram is preferably adapted for tracing the terrain, thereby maintaining a pre-set working depth of said tine shank units.

The individual tine shank units according to the present invention may be mounted to the frame using a parallelogram, i.e., support elements arranged in a parallelogram and adapted for supporting one or more tine shank units. The parallelogram traces the terrain and maintains the set working depth of the cultivation units in a precise way. The parallelogram eliminates movements caused by unevenness.

The cultivating implement may also comprise one or more support wheels, preferably operably connected to a parallelogram. A support wheel further aid in maintaining the set working depth and perfectly trace the terrain.

As used in the specification and the appended claims, the singular forms "a", "an", and "the" include plural referents unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about", it will be understood that the particular value forms another embodiment.

It should be noted that embodiments and features described in the context of one of the aspects of the present invention also apply to the other aspects of the invention.

### Brief description of the figures

Figure 1 shows a perspective view of a tine shank unit according to the present invention.
Figure 2A shows a side view of a tine shank unit according to the present invention, where a part of the housing has been removed.
Figure 2B shows a conventional tine shank unit.
Figure 3 shows a perspective view of a part of a cultivating implement in accordance with various embodiments of the invention.

### References

- 100: Part of a cultivating implement
- 110: Parallelogram
- 120: Support wheel
- 200: Tine shank unit
- 210: Tine shank
- 212: First end
- 214: Second end
- 220: Housing
- 230: Spring
- 232: First end
- 234: Second end
- 240: Spring resistance regulation unit
- 242: Bolt
- 244: Nut
- 250: Working depth regulator mechanism

### Detailed Description of the Invention

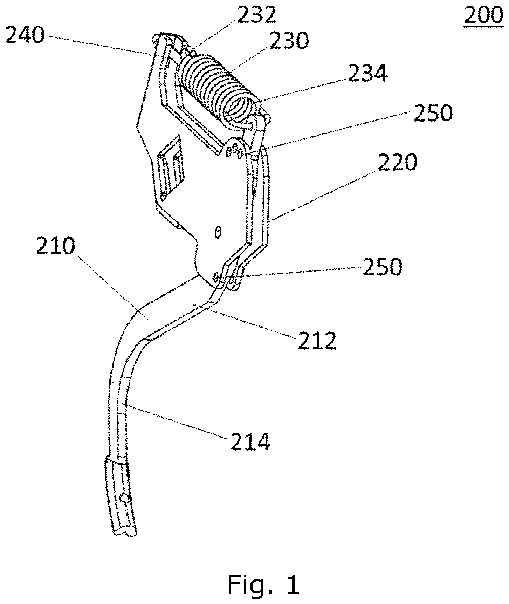

Figure 1 shows a perspective view of a tine shank unit 200 according to the present invention. The shown tine shank unit 200 is particularly useful for row cleaners.

The tine shank unit 200 comprises a tine shank 210, a housing 220, a coil spring 230 (configured as a tension spring), a spring resistance regulation unit 240, and a working depth regulator mechanism 250.

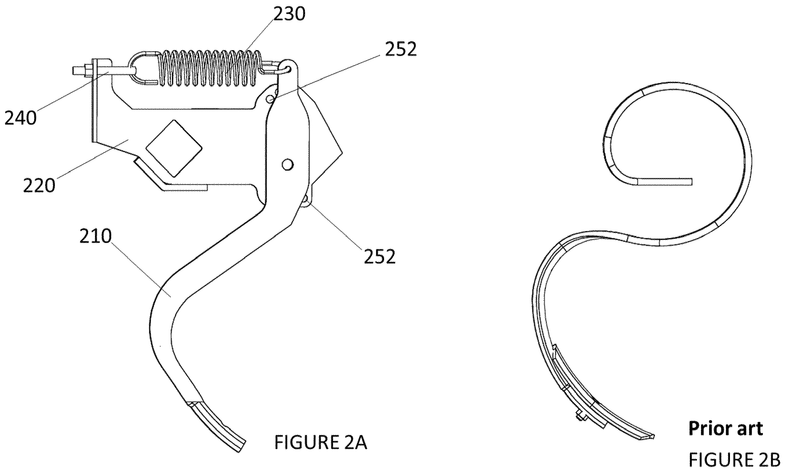

The tine shank 210 is tiltably mounted to the housing 220 by a pin joint. The first end 212 of the tine shank 210 is mounted to an end 234 of the spring 230, and the other end 232 of the spring 230 is indirectly mounted to the housing 220 via a spring resistance regulation unit 240, here embodied as a treaded bolt 242 operably connected to the spring 230, and a treaded nut 244 operably connected to the bolt 242 for adjustment thereof (Easier seen in Figure 2). In this way, the spring is extended as the nut 244 is turned in one way and relaxed as the nut 244 is turned the opposite way. The spring 230 is mounted such that it is stretched when the second end 214 of the tine shank 210 is forced backwards during a forward operation of said tine shank unit 200. This is to avoid that the tine shank 210 is damaged if it gets stuck in an obstacle. It is preferred that the spring 230 gets damaged in such a situation as it is cheaper and easier to replace. The spring 230 is mounted horizontally relative to the housing 220 and the ground on which the tine shank unit 200 operates during use. Another way of describing the position of the spring 230 is that it is mounted essentially perpendicular to the first end 212 of the tine shank 210, or mounted in parallel to the driving direction.

Figure 2A shows a side view of a tine shank unit 200, where a part of the housing 220 has been removed to better see the tine shank 210. The tine shank 210 is sickle shaped, with a substantially straight first end 212 and a substantially curved second end 214. For comparison, Figure 2B shows a conventional S-tine.

The housing 220 comprises a working depth regulator mechanism 250 adapted for regulating the working depth of the tine shank 210 by regulating the tilt angle of the tine shank 210. In this specific embodiment, the working depth regulator mechanism 250 comprises three pin holes 252 formed the upper part of the housing 220, and a single pin hole 252 formed in the lower part of the housing 220. The insertion of a working depth regulator pin (not shown) into one of the pin holes 252 allows a user to regulate the tilt angle of said tine shank 210 as the movement of the tine shank around the pin joint is restricted.

The tine shank unit 200 further comprising a tine point (not shown) adapted for loosening soil, such as a cultivator sweep. The tine point is adapted for releasably fastening to the second end 214 of the tine shank 210.

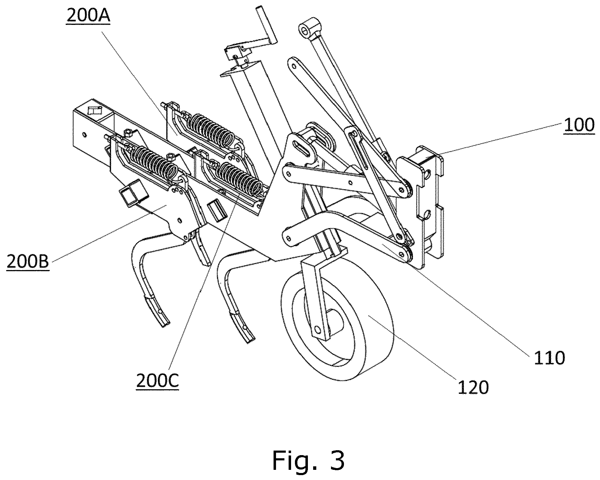

A part or section of a row cleaner 100, with three tine shank units 200A-C mounted thereon may be seen in Figure 3. The section of the row cleaner 100 comprises a parallelogram 110 adapted for supporting the three tine shank units 200A-C and is adapted for tracing the terrain, thereby maintaining a pre-set working depth of the tine shank units 200A-C. The section of the row cleaner 100 also comprises a support wheel 120 operably connected to the parallelogram 110. The support wheel 120 further aids in maintaining the set working depth and to trace the terrain.

## Claims

1. A tine shank unit (200) for cultivating implements, such as row cleaners, said tine shank unit (200) comprising:
- a tine shank (210) with a first end (212) and a second end (214);
- a housing (220); and
- a spring (230) with a first end (232) and a second end (234);
wherein the first end (212) of said tine shank (210) is tiltably mounted to the housing (220), wherein the first end (212) of said tine shank (210) is mounted to the second end (234) of said spring (230), and wherein the first end (232) of said spring (230) is mounted to said housing (220).

2. The tine shank unit (200) according to claim 1, wherein the spring (230) is mounted such that it is stretched when the second end (214) of the tine shank (210) is forced backwards during a forward operation of said tine shank unit (200).

3. The tine shank unit (200) according to any one of the claims 1-2, wherein the spring (230) is configured as a tension spring.

4. The tine shank unit (200) according to any one of the claims 1-3, further comprising a spring resistance regulation unit (240) operably connected to said spring (230).

5. The tine shank unit (200) according to any one of the claims 1-4, wherein the tine shank (210) is sickle shaped, wherein the first end (212) of said tine shank (210) is substantially straight, and wherein the second end (214) of said tine shank (210) is substantially curved.

6. The tine shank unit (200) according to any one of the claims 1-5, wherein the housing (220) comprises a working depth regulator mechanism (250) adapted for regulating the working depth of said tine shank (210).

7. The tine shank unit (200) according to any one of the claims 1-6, wherein the housing (220) comprises a working depth regulator mechanism (250) adapted for regulating the working depth of said tine shank by regulating the tilt angle of said tine shank (210).

8. The tine shank unit (200) according to claim 7, wherein said working depth regulator mechanism (250) comprises:
- one or more pin holes (252) formed in said housing (220); and
- one or more working depth regulator pins;
wherein the insertion of said one or more working depth regulator pins into said one or more pin holes (252) allows a user to regulate the tilt angle of said tine shank (210).

9. The tine shank unit (200) according to any one of the claims 1-8, wherein the spring (230) is a coil spring.

10. The tine shank unit (200) according to any one of the claims 1-9, further comprising a tine point adapted for loosening soil, such as a cultivator sweep, said tine point adapted for releasably fastening to the second end (214) of said tine shank (210).

11. A cultivating implement (100) comprising a tine shank unit (200) according to any one of the claims 1-10.

12. The cultivating implement (100) according to claim 11, further comprising support elements arranged in a parallelogram (110) and adapted for supporting one or more tine shank units (200) according to any one of the claims 1-10, said parallelogram (210) adapted for tracing the terrain, thereby maintaining a pre-set working depth of said tine shank units (200).
